# EUROPEAN PATENT APPLICATION

(11) **EP 3 654 672 A1**
(43) Date of publication of application: **20.05.2020**
(21) Application number: 18206414.7
(22) Date of filing: 15.11.2018
(51) Int. Cl.: H04W 4/02, H04W 48/16, H04W 48/18, H04W 48/20

(54) **DATA TRANSFER OVER A MOVEMENT SYSTEM**

(71) Applicant: Vestel Elektronik Sanayi ve Ticaret A.S., 45030 Manisa (TR)
(72) Inventor: DÖNER, Cagdas, 45030 Manisa (TR)
(74) Representative: Kehl, Ascherl, Liebhoff & Ettmayr Patentanwälte Partnerschaft mbB

(57) **Abstract**

A system 100 for transmitting data to an electronic device 102 by a movement pattern is disclosed.

## Description

### FIELD OF THE INVENTION

The invention relates to a system 100 for providing data transfer via movements executed by a movement system 100, electronic devices 102 capable of converting the information provided in the movements into data and methods to be executed on said system 100 and devices 102.

### BACKGROUND

When an electronic device is to be connected with a network the device needs various network configuration information before connecting with the network. This is, in particular, true when the network capable device is to be connected with a wireless network wirelessly, for example, via an access point. For example, in 802.11 Wireless LAN networks, an SSID and passphrase are required for a successful authentication to the local network. This authentication process is usually handled via user interaction over a user interface of the mobile device. Internet of Thing, loT, devices, which are now becoming more popular, are devices with constrained technical capabilities and usually lack keyboards or touchscreens making it difficult for a user to establish a connection of loT devices to a network.

Methods for of establishing a connection with a wireless network can also involve matching the movement of a device determined within the device with a movement of the device observed by a camera (EP 2 996 429 A1). Moreover, controlling the functions of mobile devices via particular movements of the device, which had been determined by gyro-sensors is also described (US 2005/0216867 A1).

However and in general, the establishment of a connection of a network capable device 102 with a wireless network is achieved by transmitting information via a radio network. To simply these procedures technologies like Wireless Protected Setup, WPS, and Device Provisioning Protocol, DPP have been established. Other forms of establishing a connection with a wireless network involve the use of visible light communication methods and communication methods using acoustic waves.

### OBJECT OF THE DISCLOSURE

Therefore, it is an object of the present disclosure to provide improved methods and systems for transferring data to an electronic device.

### SUMMARY

The object has been solved with the subject matter defined in the appended claims.

A system 100 for transmitting data to an electronic device 102 is provided comprising
a. a movement apparatus 101 for moving the device 102 comprising
   i. positioning means 103 configured to retain and position the device 102;
   ii. driving means 104 coupled to the positioning means 103 and configured to move the positioning means 103 in two or three spatial dimensions;
b. processing apparatus 105 configured to
   i. convert data to be received by the network capable device 102 into instructions for the driving means 104 for moving the positioning means 103 according to a movement pattern; and
   ii. instruct the driving means 104 to move the positioning means 103 according to the instructions.

The movement apparatus 101 may be a three-dimensional printer.

The data can comprise network provisioning information.

The device 102 can be a network capable device 102.

One or/and more bits, in particular, one and two bits of the information provided by the data can be linked or coded into a predefined movement of the positioning means 103.

The network provisioning information may comprise a service set identifier, SSID, password for a router or network, and/or channel information.

The instructions for the driving means 104 may comprise information on a sequence of movements to be performed by the positioning means 103, comprise information on at least two positions of the positioning device 102 and/or information on the time period required for a movement or position.

The instructions for the driving means 104 may be provided as OBJ file, Standard Triangulation Language file, STL file, or Virtual Reality Modeling Language file, VRML file.

The system 100 may further comprise the network capable device 102.
The network capable device 102 may be a mobile user equipment or Internet of Things Device 102.

The device 102 may comprise an accelerometer or gyroscope.
The device 102 may be configured to determine the movement pattern via the accelerometer or gyroscope and covert the movement pattern into network provisioning information.

Provided is also a method for providing a movement pattern comprising:
converting data to be received by an electronic device 102 into instructions for moving the device 102 according to a movement pattern;
providing the instructions to a movement apparatus 101 for moving the device 102. The method may further comprise moving the device 102 according to the instructions.

Disclosed is also a method for decoding data comprising
determining, by an electronic device 102 a movement pattern and converting the movement pattern into network provisioning information.

A data carrier is also provided which when loaded into a computer system 100 performs the method of the disclosure.

A computer system is also provided comprising the data carrier and processing means which performs the method stored on the data carrier.

### BRIEF DESCRIPTION OF THE FIGURES

Figure 1 illustrates system 100 for transmitting data, in particular, network structure information to a device 102, in particular, a network capable device 102, using a movement pattern.

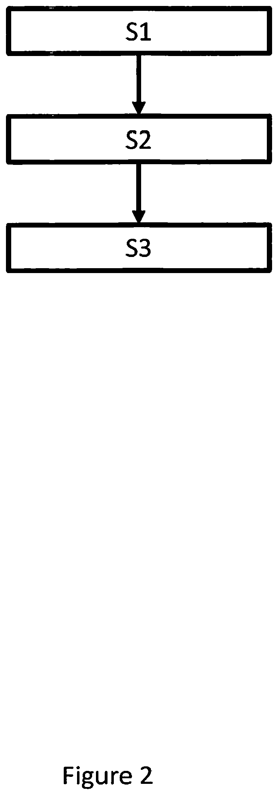

Figure 2 illustrates a system 100 for transmitting data, in particular, data comprising network structure information to a device 102, in particular, a network capable device 102 using a movement pattern.

### DETAILED DESCRIPTION OF THE FIGURES

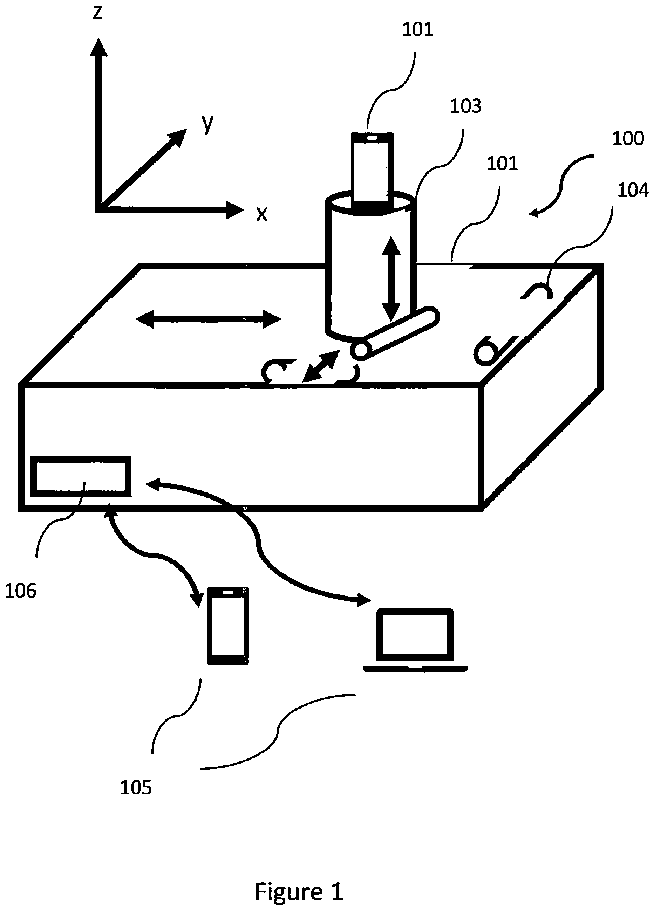

Provided is a system 100 for transmitting data to a device 102 via a movement pattern as illustrated in figure 1. While the system 100 can transmit data of any kind to any device 102 the following description exemplary illustrates the invention with respect to a network capable device 102 and with respect to data which is comprising network provisioning information. However, it should be understood that the disclosure can be used for transmitting any data to any electronic device 102 comprising a gyroscope or accelerator.

The electronic devices 102 of the disclosure can comprise a processor, field programmable array, FPGA, or application-specific integrated circuit, ASIC, a memory, and an interface for connecting with a network, for example, a transmitter and/or receiver for transmitting/receiving radio waves (WIFI, Bluetooth, radio network like GSM, LTE or evolved LTE or any successors of these standards). Network capable devices 102 are devices 102 which can be connected to a network wirelessly or by wire. Preferably, the network capable devices 102 are connected wirelessly. The network capable device 102 can be a mobile user equipment, like mobile phone or laptop and/or an Internet of Thing device 102, for example, devices 102 comprising sensors and/or actuators.

For connecting a network capable device 102 network provisioning information can be required which provides the network capable device 102 with the information required to establish a connection with the network including information required for authentication, authorization and the parameters of the configuration of the network. The provisioning information can be in the form of, for example, a password which may comprise letters, numbers and/or symbols. Usually, this network provisioning information is manually input into the network capable device 102 by a human machine interface, like a keyboard or touch screen. This interaction is advantageously replaced in the present disclosure by a movement pattern which can be determined in the network capable device 102 and converted into the network provisioning information.

An overview of the system 100 of the disclosure is provided in figure 1. The system 100 comprises a processing apparatus 105 for converting (or coding, transforming etc.) network provisioning information into instructions defining a movement pattern. The system 100 can further comprise a movement apparatus 101 for moving a network capable device 102. Both the processing apparatus 105 and the movement apparatus 101 can comprise a communication interface 106, for example, USB, UART, serial interface (e.g. RS232, Bluetooth, WiFi or similar interface) allowing to transfer the converted provisioning information from the processing apparatus 105 to the movement apparatus 101. This connection does not need to be permanent and thus the movement apparatus 101 comprising the once received converted provisioning information (e.g. stored in a memory thereof) can perform the movement pattern in the absence of the processing apparatus 105 using an optionally build-in processing means for performing the instructions and instructing the driving means 104. It is also contemplated that the processing apparatus 105 is integrated into the movement apparatus 101.

The movement apparatus 101 for moving a network capable device 102 comprises positioning means 103 configured to retain and position the network capable device 102 in three-dimensional space and driving means 104 configured to move the positioning means 103 in two or three spatial dimensions. The positioning means 103 allows to detachably attach (i.e. fixate) the network capable device 102 to the movement apparatus 101 and thus any movement performed by the positioning means 103 is also performed by the network capable device 102 when attached to the positioning means 103. Attachment can be achieved by any suitable attachment means, like clamps, adhesive strips, a housing into which the network capable device 102 can be reversibly locked etc. The positioning means 103 can also comprise a movable mechanical arm consisting of various arm segments which are movable to each other in two or three spatial dimensions, for example, a robotic arm. In figure 1 an exemplary housing is illustrated as the positioning means 103. The positioning means 103 can also comprise gears allowing gear wheels of the driving means 104 to move the positioning means 103 in a desired spatial direction. The positioning means 103 is coupled to the driving means 104 in a manner that allows the driving means 104 to move the positioning means 103 from one defined point in three-dimensional space to another point in three-dimensional space. The driving means 104 can be any suitable actuator that can move the positioning means 103 in a desired spatial direction. Figure 1 illustrates actuators symbolically which via attached belt like structures can move the positioning means 103 in the x, y, and/or z direction wherein the x, y, and/or z direction are orthogonal spatial vectors. However, the movements need not necessarily need t o follow the direction of the x,y, and vectors. The movement apparatus 101 can perform any desired spatial movement of the positioning means 103, i.e. move the positioning means 103 into any desired spatial position or pint, for example, along the x, y, or z axis or following a vector in any angle (0°-360°) in relation to any of the vectors or a combination thereof, i.e. any desired 3-axis movement is possible.

A movement is understood to relate to the relocation of the positioning means from one point in three-dimensional space, for example, defined by cartesian coordinates (X1,y1,z1) to another point in three-dimensional space, for example (X2,y2,z1). Furthermore, the movement apparatus 101 can perform a sequence of movements, i.e. can subsequently position the positioning means 103 into different positions, i.e. points in space. The distance between the points can be the same or different when a sequence of movements is performed. The time period for a movement or holding of a position can also be freely adjusted. The maximal dislocation of the positioning device 102 between two positions is merely limited by the range in which the positioning device 102 can be moved due to the constructional constraints of the movement apparatus 101.

Preferably, the movement apparatus 101 is a three dimensional printer, 3-D printer, which are now becoming more and more popular and allow precise movements of their printing unit(s) and/or printing filament. The printing unit can be equipped with a desired positioning means 103 by any suitable attachment means or replaced with a desired positioning means 103.

As stated above the conversion of the network provisioning data into instructions for a movement pattern can be performed by a processing apparatus 105. The processing apparatus 105 can be, for example, a general-purpose computer (e.g. a notebook) or a mobile user equipment, configured to perform the conversion (encoding, transformation etc.). The conversion can be performed by converting the positioning information data, which is provied as a sequence of values (of numbers or characters), preferably bits, i.e. a sequence of 0 and into a specific sequence of movements wherein each movement and/or achieved position of the positioning device 102 codes for one or more bits of data.

For example, a 3D movement can be defined into 6 parts with x+, x-, y+, y-, z+, z-. Thus, bascially 6 movements are available to encode the data defining the provisioning information. For instance, it is possible to use the following coding scheme

**Table 1**

| Movement | Data |
|---|---|
| x+ | 0 |
| x- | 1 |

This coding scheme would already be sufficient to code any binary code into a movement pattern.

It is noteworthy that movement x+ and x- are just exemplary and any defined movement from one position (x1, y1, z1) to a second position can be used to define one bit. For example, a predefined movement can be (x1, y1, z1) to (x2, y1, z1) for x+ codes for "1" (movement in defined positive direction). In another example, a predefined movement can be (x1, y1, z1) to (x1, y2, z1) for y+ as conding for "1" (movement in defined negative direction). Which movement is used for coding which piece of data or bit of data is not relevant as long as the coding of one piece of data or bit for a movement is unambigously and different from of the conding of another piece of data or bit for amovement.

Advantageously, it is also possible to code 2 and more bits into one movement by adding additional movements into the coding scheme, as shown below. Table 2 presents an extension of Table 1 and the therein disclosed scheme:

**Table 2**

| | |
|---|---|
| y+ | 00 |
| y- | 01 |
| z+ | 10 |
| z- | 11 |

Accordingly, it is possible and provides a further advantage that the network capable device 102 can receive 2 bits of information by detecting one movement and thus the transfer of information from the disclosed system 100 to the network capable device 102 doubled. The coding scheme can be further extended by defining more complex movements like x+y+ (with z being unchanged being defined, for example, as 001 and so on further enhancing the speed at which information is forwarded to the network capable device 102.

The encoded instructions for the driving means 104 can be provided in the form of any file format or instruction language this is suitable to define a movement of the movement apparatus 101, for example, an OBJ file, Standard Triangulation Language file, STL file, or a Virtual Reality Modeling Language file, VRML file.

Thus, one or/and more bits of the information provided by the data comprising the network provisioning information is linked to or coded into a particular, i.e. one movement of the positioning means 103. Due to the conversion as disclosed above a sequence of instructions for movements of the positioning means 103 is provided comprising in sequence the encoded bits, defined as a movements, of the data comprising the network provisioning information. A subsequent movement always uses the endpoint of the last movement as a starting point.

Furthermore, it also contemplated that the time period for a movement or holding of a position can be used to encode further bits.

The provisioning information to be converted can comprise a service set identifier, SSID, password for a router or network, and/or channel information. This information can be provided in the form of binary code, which is converted, for example, using the above explained coding scheme.

It is further noteworthy that the coded information does not need to contain only the payload, i.e. the network provisioning information regarding the network to which the network capable device 102 is to be connected, but configurational information on the method of the disclosure like information on a particular coding scheme or information for activating or deactivating the network capable device 102 to be in state where it is capable of detecting the information provided by the movements of the system 100 of the disclosure. Alternatively or in addition, the network capable device 102 may be set into a state for where it is capable of detecting the information provided by the movements of the system 100 by an actuator integrated into the network capable device 102, for example, a real or soft button.

The network capable device 102 to be used in the system 100 of the disclosure comprises an accelerometer, gyroscope, or any other sensor capable of determining a movement inflicted on the network capable device 102 in three-dimensional space or a position of the device in three-dimensional space and means for determining the information provided by the sensor, like a processor and memory. The network capable device 102 determines a movement pattern and converts the movement pattern into network provisioning information using the above described scheme (in reverse). Accordingly, a method for providing a movement pattern is disclosed comprising converting data, in particular, data comprising network provisioning information, to be received by a device 102, in particular, a network capable device 102 into instructions for moving the device 102 according to a movement pattern; and providing the instructions to a movement apparatus 101 for moving the device 102. The method can also comprise moving the device 102 according to the instructions.

Furthermore, a method is disclosed for decoding data comprising determining, by an electronic device 102, a movement pattern and converting the movement pattern into data, in particular, network provisioning information. One or more bits of the information provided by the data, in particular, data comprising the network provisioning information, can be linked to a predefined movement of the positioning means 103 and thus decoded by the device 102.

Disclosed is also a data carrier which when loaded into a computer performs the method of converting the data into a movement pattern or vice versa.

Furthermore, a computer system 100 is disclosed comprising the data carrier of the disclosure and processing means which perform the method stored on the data carrier of the disclosure.

Thus, a system 100 for transmitting data to an electronic device 102 by a movement pattern is disclosed.

### REFERENCE NUMERALS

- 100: System
- 101: Movement apparatus
- 102: (Network capable) Device
- 103: Positioning means
- 104: Driving means
- 105: Processing apparatus
- 106: Communication interface

## Claims

1. System (100) for transmitting data to an electronic device (102) comprising
a. a movement apparatus (101) for moving the device (102) comprising
i. positioning means (103) configured to retain and position the device (102);
ii. driving means (104) coupled to the positioning means (103) and configured to move the positioning means (103) in two or three spatial dimensions;
b. processing apparatus (105) configured to
i. convert data to be received by the device (102) into instructions for the driving means (104) for moving the positioning means (103) according to a movement pattern; and
ii. instruct the driving means (104) to move the positioning means (103) according to the instructions.

2. System (100) according to claim 1, wherein the movement apparatus (101) is a three-dimensional printer.

3. System (100) according to any of the preceding claims wherein one or more bits of the information provided by the data comprising the network provisioning information is linked to a predefined movement of the positioning means (103).

4. System (100) according to any of the preceding claims wherein the data comprises provisioning information, wherein the provisioning information optionally comprises a service set identifier, SSID, password for a router or network, and/or channel information.

5. System (100) according to any of the preceding claims wherein the instructions for the driving means (104) comprise information on a sequence of movements to be performed by the positioning means (103), comprise information on at least two positions of the positioning means (103) and/or information on the time period required for a movement or position.

6. System (100) according to any of the preceding claims wherein the instructions for the driving means (104) are provided as OBJ file, Standard Triangulation Language file, STL file, Virtual Reality Modeling Language file, VRML file.

7. System (100) according to any of the preceding claims, further comprising the device (102), wherein optionally the device (102)) is a network capable device (102).

8. System (100) according to claim 7, wherein the device (102) is a network capable device (102) and the device (102 is a second mobile user equipment or Internet of Things Device (102).

9. System (100) according to claims 7 or 8, wherein the device (102) comprises an accelerometer or gyroscope.

10. System (100) according to claim 9, wherein the device (102) is configured to determine the movement pattern via the accelerometer or gyroscope and covert the movement pattern into network provisioning information.

11. Method for providing a movement pattern comprising:
converting data to be received by an electronic device (102) into instructions for moving the device (102) according to a movement pattern;
providing the instructions to a movement apparatus (101) for moving the device (102).

12. The method of claim 11, further comprising moving the device (102) according to the instructions.

13. Method for decoding data comprising
determining, by an electronic device (102), a movement pattern and converting the movement pattern into data.

14. Data carrier which when loaded into a computer performs the method of claim 11 or 14.

15. Computer system (100) comprising the data carrier of claim 14 and processing means which performs the method stored on the data carrier of claim 14.
